# FASCICULE DE BREVET EUROPEEN

(11) **EP 1 463 969 B1**
(45) Date de publication et mention de la délivrance du brevet: **10.05.2006**
(21) Numéro de dépôt: 03712221.5
(22) Date de dépôt: 09.01.2003
(51) Int. Cl.: G02B 21/26

(54) **DISPOSITIF DE POSITIONNEMENT D'UNE PLAQUE D'ANALYSE D'ECHANTILLONS SUR UN DISPOSITIF D'OBSERVATION**
EINRICHTUNG ZUR POSITIONIERUNG EINER PLATTE, MIT DER PROBEN AUF EINER UNTERSUCHUNGSEINRICHTUNG ANALYSIERT WERDEN
DEVICE FOR POSITIONING A PLATE USED FOR ANALYZING SAMPLES ON AN EXAMINATION DEVICE

(30) Priorité: 10.01.2002 FR 0200245
(43) Date de publication de la demande: 06.10.2004
(73) Titulaire: Trophos, 13288 Marseille Cedex 9 (FR)
(72) Inventeur: DELAAGE, Michel, F-13001 Marseille (FR)
(74) Mandataire: Tezier Herman, Béatrice
(86) Numéro de dépôt international: PCT/FR2003/000045
(87) Numéro de publication internationale: WO 2003/058317

(56) Documents cités:
- FR-A- 2 808 888
- US-A- 3 652 146
- US-A- 5 684 628
- US-A- 5 812 310

## Description

La présente invention concerne un dispositif de positionnement d'une plaque ou autre support comportant des échantillons sur un dispositif d'observation ou d'analyse, permettant l'observation ou l'analyse séquentielle de plusieurs échantillons disposés côte à côte sur la plaque, ou de plusieurs régions d'un même échantillon.

La présente invention vise à faciliter l'analyse numérique rapide d'objets de grande taille par des capteurs CCD. Ces derniers ont des dimensions limitées (5 à 7 mm) et la lecture numérique à haute résolution d'objets de 10 cm ou plus nécessite la répétition des images dans des conditions de reproductibilité, parfois avec un raccordement pixel à pixel. La lecture à haute résolution signifie également une faible profondeur de champ, incompatible avec les déformations inévitables de l'objet, qu'il s'agisse d'une plaque (ou lame) de verre ou d'une plaque de culture alvéolée.

La demande WO01/88593 décrit un procédé permettant le maintien de la mise au point sur un dispositif d'analyse, au prix d'un jeu latéral entre l'échantillon et son support. Un tel dispositif est donc incompatible avec un raccordement pixel à pixel des images. Un tel dispositif ne permet pas non plus, de manière appropriée, l'enregistrement de cinétiques d'évolution d'une image. Un dispositif correspondant au préambule de la revendication 1 est connu de US-A-3 652 146. D'autres dispositifs, plus classiques, sont conçus pour maintenir fixe le support d'échantillon, autorisant la réalisation de cinétiques et un raccordement éventuel pixel à pixel. Néanmoins, ces dispositifs ne possédant pas de mobilité dans l'axe d'observation, ils ne permettent pas de réaliser une mise au point automatique de l'objectif sur les échantillons.

Les dispositifs d'analyse décrits dans l'art antérieur présentent donc des inconvénients qui résident dans l'absence de reproductibilité de la lecture et dans l'incompatibilité avec le balayage rapide de multiples échantillons, par exemple lorsqu'une même plaque doit être analysée à différents temps pour effectuer de véritables cinétiques sur des cellules ou autres échantillons individuels repérés par les numéros de pixels sur chaque image. Avec les dispositifs antérieurs, il ne peut être garanti que les cellules analysées sont les mêmes d'une lecture à l'autre. Cette imprécision peut dépasser 100 microns, ce qui est excessif pour les applications en cinétique. De plus, les plaques d'analyse utilisées comportent le plus souvent des défauts de planéité de leur face inférieure formant les fonds des puits, de telle sorte que ces défauts font varier la distance entre l'objectif et l'échantillon à analyser et empêchent le maintien de la mise au point.

Compte tenu de ces imprécisions, il est nécessaire pour procéder à l'observation complète d'une plaque ou d'échantillons de taille importante, de corriger fréquemment la mise au point de l'objectif pour compenser la variation de cette distance et/ou de procéder à des corrections de positionnement horizontal pour garder le cadrage de l'image sur le capteur.

Cette nécessité de procéder fréquemment à des réglages, soit de la mise au point de l'objectif, soit de positionnement, réduit la vitesse d'acquisition des images des échantillons et peut rendre impossible la lecture haute résolution.

L'invention a pour but d'éviter ces inconvénients. Elle propose maintenant un dispositif qui permet d'assurer à la fois un positionnement correct d'une plaque (ou autre support) d'analyse devant un objectif, de reproduire ce positionnement lors de mesures répétées, d'assurer un déplacement contrôlé de la plaque, et de conserver une mise au point. La présente invention fournit ainsi un dispositif de positionnement de supports d'échantillons par rapport à un objectif d'analyse, qui permet d'effectuer des mesures reproductibles et rapides d'échantillons de grande dimension et/ou de pluralités d'échantillons. L'invention concerne également tout dispositif d'analyse incorporant un tel dispositif de positionnement.

L'invention a donc pour objet un dispositif de positionnement d'une plaque comportant un ou des échantillons (ou adaptée à recevoir un ou des échantillons) sur un dispositif d'observation ou d'analyse comportant un objectif d'observation ou d'analyse d'au moins une partie d'un échantillon suivant un axe d'observation depuis une face d'observation de la plaque et un châssis muni d'un ensemble de support de la plaque, caractérisé en ce que l'ensemble de support comprend :
- un premier cadre déplaçable à coulissement dans un plan perpendiculaire à l'axe d'observation,
- un deuxième cadre supporté par le premier cadre et déplaçable à coulissement dans ledit plan perpendiculaire à l'axe d'observation, les premier et deuxième cadres étant déplaçables chacun selon une direction perpendiculaire à la direction de déplacement de l'autre cadre, et
- un troisième cadre supporté par le deuxième cadre par des moyens de maintien de ce troisième cadre bloquant ledit troisième cadre dans un plan essentiellement perpendiculaire à l'axe d'observation, tout en laissant libre le déplacement du troisième cadre essentiellement selon l'axe d'observation, ledit troisième cadre étant pourvu de moyens de blocage de la plaque, et
   - le dispositif comporte des moyens d'asservissement de la position verticale de la face d'observation de la plaque d'analyse par rapport à l'objectif.

Suivant des modes particuliers de réalisation de l'inventian :
- l'ensemble de support comporte des moyens d'immobilisation verticale du troisième cadre pour la mise en place de la plaque d'analyse,
- les moyens de maintien du troisième cadre comprennent au moins une lame ressort mince formant un pivot, située préférentiellement dans le plan d'observation, ladite lame ressort étant reliée respectivement au deuxième cadre et au troisième cadre,
- la ou les lames ressort formant un pivot s'étendent de préférence perpendiculairement à la direction de déplacement du second cadre,
- de façon alternative, les moyens de maintien du troisième cadre comprennent, d'une part, un axe d'articulation monté entre les deuxième et troisième cadres, s'étendant de préférence perpendiculairement à la direction de déplacement du second cadre et, d'autre part, au moins un ressort de torsion interposé entre lesdits deuxième et troisième cadres,
- le déplacement du troisième cadre essentiellement selon l'axe d'observation s'effectue généralement dans un plan vertical, et selon un angle de pivotement limité, c'est-à-dire généralement inférieur à environ 0,5°, qui est déterminé essentiellement par la position de la plaque sur l'objectif,
- les moyens de blocage de la plaque sont formés par des sabots d'appui répartis sur le pourtour interne du troisième cadre et par une came montée sur le troisième cadre et déplaçable par pivotement entre une position escamotée et une position en saillie à l'intérieur du troisième cadre pour bloquer la plaque,
- la came de blocage de la plaque comporte un moyen d'appui sur le piétement de la plaque, par exemple un moyen réglable, tel qu'une vis, dont la tête ou la pointe peut reposer sur le piétement de la plaque,
- une partie au moins des sabots d'appui, particulièrement ceux disposés sur les cotés du cadre opposés à la came de blocage, comportent un évidement destiné à recevoir le piétement de la plaque,
- les moyens d'immobilisation du troisième cadre sont formés par deux butées opposées, montées chacune sur un côté du premier cadre s'étendant parallèlement à la direction de déplacement du second cadre et par deux pattes opposées et fixées chacune perpendiculairement à un côté du troisième cadre s'étendant parallèlement à ladite direction, chaque butée comportant un pan incliné destiné à coopérer avec l'extrémité libre de la patte correspondante lors du déplacement dans cette direction des deuxième et troisième cadres,
- les moyens d'asservissement sont formés par une entretoise fixe par rapport à l'objectif et présentant une surface d'appui de la face d'observation de la plaque,
- les moyens d'asservissement sont formés par un système de sustentation magnétique ou piézoélectrique de la plaque,
- le troisième cadre est ouvert ou fermé,
- les déplacements du premier et du second cadre sont motorisés.

L'invention concerne également un dispositif d'observation ou d'analyse d'échantillons comprenant un dispositif de positionnement d'une plaque tel que décrit ci-avant. Le dispositif d'observation ou d'analyse comporte avantageusement une source d'illumination d'au moins une partie d'un échantillon et des moyens d'acquisition d'une image.

Un dispositif d'observation ou d'analyse selon l'invention comporte typiquement un objectif d'observation ou d'analyse d'au moins une partie d'un échantillon suivant un axe d'observation depuis une face d'observation de la plaque et un ensemble de support de cette plaque tel que décrit ci-avant, adapté pour assurer un déplacement relatif entre la plaque et l'axe d'observation dans un plan perpendiculaire à l'axe d'observation, mais laissant libre le déplacement le long de l'axe d'observation supposé vertical. Il comporte en outre des moyens d'illumination d'au moins une partie d'un échantillon et des moyens d'acquisition d'une image en sortie de l'objectif.

La source d'illumination peut être une lampe, un laser ou un ensemble de diodes électroluminescentes.

Pour procéder à l'observation ou à l'analyse des échantillons, la plaque est disposée au-dessus ou au-dessous de l'objectif du dispositif, de préférence au dessus, dont l'axe est supposé vertical. L'observation s'effectue au travers du fond de chaque puits, c'est à dire au travers de la face inférieure de la plaque, cette face inférieure constituant la face d'observation, ou directement au-dessus de l'échantillon. Les échantillons sont amenés un à un au regard de l'objectif par déplacement de la plaque dans un plan perpendiculaire à l'axe d'observation grâce à l'ensemble de support. Cet ensemble est adapté pour maintenir la plaque essentiellement ou seulement à sa périphérie, laissant libre ainsi la face d'observation de la plaque. Pour maintenir la mise au point, la face d'observation est en appui sur une entretoise reposant sur l'objectif, dans l'axe d'observation. Un tel dispositif est particulièrement adapté à l'analyse rapide d'échantillons.

L'analyse cellulaire rapide sur un grand nombre d'échantillons est une nécessité dans l'industrie pharmaceutique, pour le criblage à haut débit de nouvelles substances actives, et dans l'industrie des cosmétiques, où des modèles cellulaires sont utilisés pour tester des nouvelles substances et contrôler les fabrications. L'analyse biologique d'échantillons est également importante dans les domaines du diagnostic ou de la pharmacogénomique (prédisposition à une pathologie, potentiel répondeur d'un sujet à un traitement, recherche d'allergènes, etc.).

Les dispositifs selon l'invention peuvent être utilisés pour l'analyse rapide d'un grand nombre d'échantillons disposés sur une plaque ou pour l'analyse d'échantillons (ou d'objets) de taille importante, nécessitant la réalisation et le raccordement de plusieurs images. Les échantillons sont typiquement des échantillons biologiques, qui peuvent par exemple comprendre des cellules, en particulier des cellules adhérentes, mammaliennes, procaryotes, végétales, des acides nucléiques, des protéines (ou polypeptides), des virus ou d'autres organismes, par exemple pathogènes, etc. L'échantillon peut également comprendre des particules synthétiques, etc. L'échantillon peut également être un objet de dimension importante, tel qu'une coupe d'un animal (par exemple d'un rongeur) ou d'un organe.

Par ailleurs, bien que la description ou les exemples mentionnent plus spécifiquement un appareil de positionnement ou d'analyse mettant en oeuvre une plaque, il est entendu que les dispositifs selon la présente demande sont adaptés à l'utilisation de tout support approprié pour des échantillons, tels que, outre des plaques (e.g., des plaques multi-puits), des lames, des membranes, etc.

L'invention sera mieux comprise à la lecture de la description qui va suivre, donnée uniquement à titre d'exemple et faite en référence aux dessins annexés, sur lesquels :
- la Fig. 1 est une vue schématique en coupe dans un plan vertical d'un dispositif d'observation muni d'un dispositif de positionnement d'une plaque d'analyse, conforme à l'invention,
- la Fig. 2 est une vue schématique de dessus du dispositif de positionnement conforme à l'invention,
- la Fig. 3 est une vue de côté du dispositif de positionnement de la Fig. 2,
- la Fig. 4 est une vue schématique en coupe dans un plan vertical d'un sabot de positionnement de la plaque d'analyse, avec évidement (Fig 4A) ou sans évidement (Fig. 4B),
- la Fig. 5 est une vue schématique en coupe dans un plan vertical d'une came de blocage de la plaque d'analyse, comportant un moyen d'appui sur le piétement de la plaque.

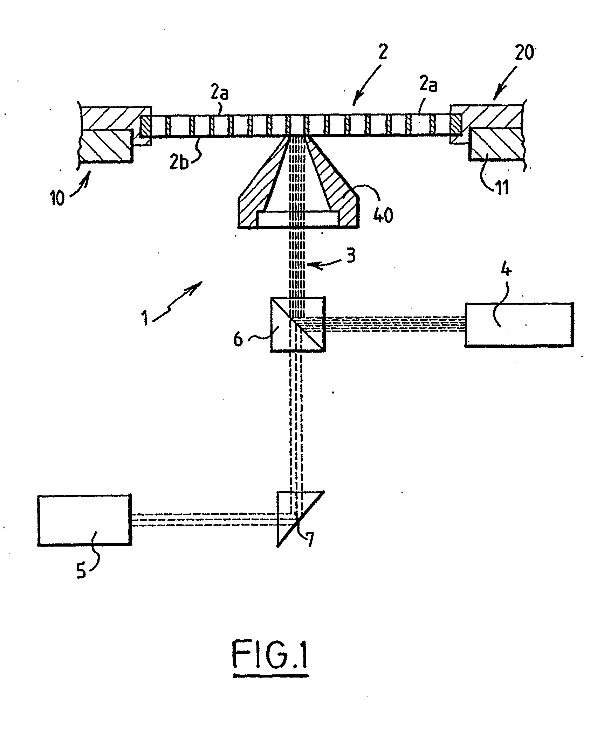

Sur la Fig. 1, on a représenté schématiquement un dispositif d'observation désigné dans son ensemble par la référence 1 et qui comporte un dispositif de positionnement désigné par la référence générale 10 (sabot non représenté) d'une plaque 2 d'analyse d'échantillons biologiques, un objectif d'observation 3, une source 4 d'illumination locale de la plaque 2, une caméra 5 placée en arrière de l'objectif 3 et une unité de traitement d'information, non représentée, tel qu'un micro-ordinateur relié à la caméra 5 et aux moteurs de déplacement des cadres 1 et 2. L'entretoise 40 impose une distance constante entre l'objectif et la face d'observation de la plaque 2. Le dispositif de positionnement 10 comporte un châssis 11 muni d'un ensemble 20 de support de la plaque 2. L'ensemble de support de plaque comporte lui-même trois cadres 21, 22, 23, non représentés, qui assurent le maintien, le déplacement et le positionnement contrôlés et précis de la plaque 2.

Un prisme 6 de renvoi du faisceau incident issu de la source 4 est disposé en arrière de l'objectif 3 pour diriger le faisceau incident suivant l'axe optique de cet objectif 3 en direction de l'échantillon.

De même, un prisme 7 ou miroir incliné est prévu en arrière de l'objectif 3 pour dévier le faisceau en sortie de cet objectif 3 vers la caméra 5.

Ce dispositif d'observation 1 est adapté pour l'observation rapide d'échantillons contenus dans des puits adjacents 2a de la plaque 2.

Les plaques utilisées pour contenir des échantillons ont une forme générale de plateau. Elles présentent un ensemble d'alvéoles adjacents, appelés puits, dans tout ou partie desquels est contenu l'échantillon. Ces puits sont généralement d'axes parallèles les uns aux autres et s'étendent suivant l'épaisseur de la plaque. Ils débouchent à la surface supérieure de la plaque et sont obturés par un fond formant généralement la face inférieure de la plaque. Les fonds de puits adjacents sont donc généralement reliés les uns aux autres si bien que la face inférieure de cette plaque est essentiellement continue.

Ainsi que représenté à la Fig. 1, la plaque 2 utilisée comporte préférentiellement une face inférieure continue 2b formant le fond des puits 2a et constituant une face d'observation en travers de laquelle les échantillons sont observés.

Les puits 2a s'ouvrent à la surface supérieure de la plaque 2 et ils sont sensiblement cylindriques de section circulaire ou carrée et ont un fond essentiellement plan.

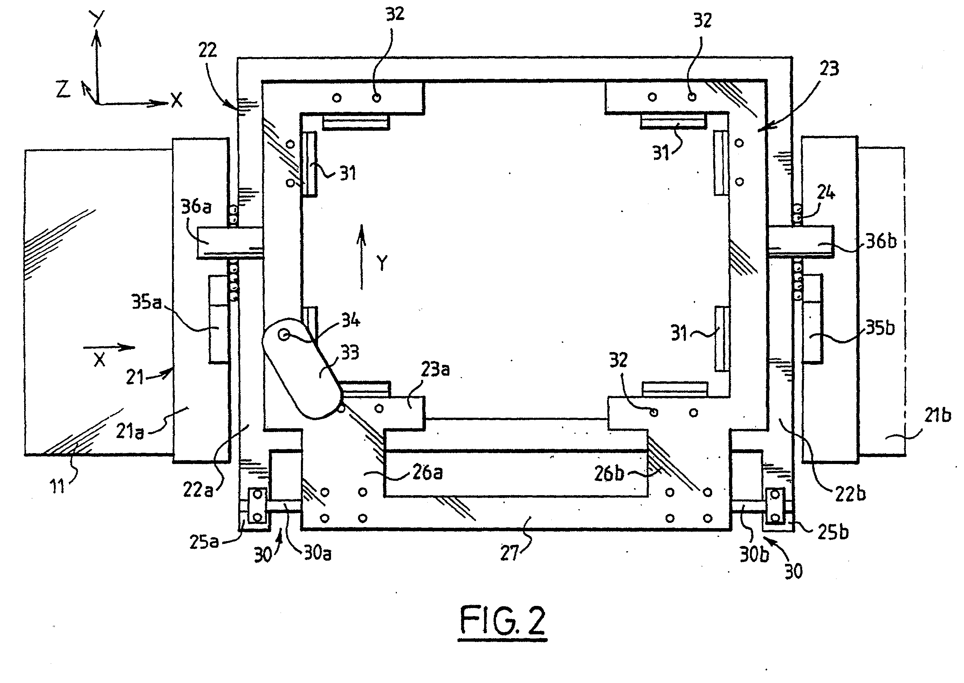

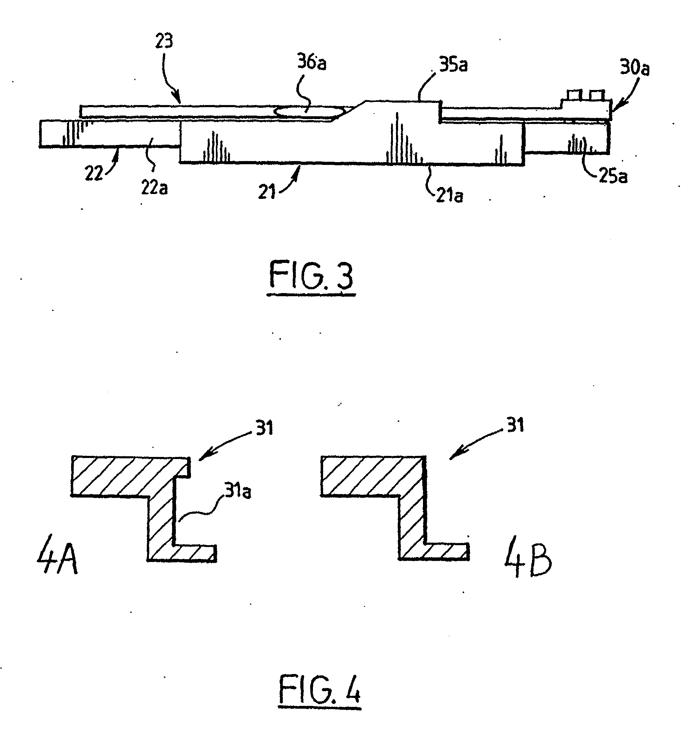

En se reportant maintenant aux Figs 2 et 3, on va décrire plus précisément l'ensemble 20 de support de la plaque 2.

Dans un but de simplification, le bâti 11 a été représenté partiellement sur la Fig. 2.

Cet ensemble 20 de support comporte trois cadres portés les uns par les autres, un premier cadre 21, un deuxième cadre 22 et un troisième cadre 23.

Le premier cadre 21 dont on n'a représenté qu'une partie sur la Fig. 2, est déplaçable à coulissement horizontalement dans un plan perpendiculaire à l'axe d'observation de l'objectif d'observation 3 par rapport au châssis 11 par exemple le long de glissières à billes, non représentées, ou à l'aide de tout autre moyen approprié.

De préférence, ce cadre 21 est déplaçable selon la direction X du repère orthonormé XYZ, comme représenté à la Fig. 2.

Le deuxième cadre 2 supporté par le premier cadre 21 est déplaçable horizontalement à coulissement dans le plan perpendiculaire à l'axe d'observation et dans une direction Y du repère orthonormé XYZ.

Ainsi, le premier cadre 21 et le deuxième cadre 22 sont déplaçables chacun selon une direction perpendiculaire à la direction de déplacement de l'autre cadre.

Le deuxième cadre 22 est déplaçable par rapport au premier cadre 21 par exemple le long de glissières à billes 24 ou par tout autre moyen approprié.

Comme on le voit à la Fig. 2, les côtés, respectivement 22a et 22b du cadre 22, s'étendant parallèlement à la direction Y de déplacement de ce cadre 22 comportent chacun un prolongement, respectivement 25a et 25b.

Le troisième cadre 23 est supporté par le deuxième cadre 22 par des moyens de maintien de ce troisième cadre 23 bloquant ledit troisième cadre 23 dans le plan perpendiculaire à l'axe d'observation du dispositif d'observation 3, tout en laissant libre le déplacement dans un plan vertical et selon un angle de pivotement limité.

Pour cela, le troisième cadre 23 comporte sur l'un de ses côtés, par exemple 23a, s'étendant perpendiculairement à la direction Y de déplacement du deuxième cadre 22, deux prolongements parallèles respectivement 26a et 26b s'étendant perpendiculairement audit côté 23a. Les extrémités libres des prolongements 26a et 26b sont reliées par une traverse 27 supportant les brides de fixation de la ou des lames ressort. Il est entendu que le cadre 23 peut être fermé ou ouvert, selon les nécessités de l'environnement.

Les moyens de maintien du troisième cadre 23 comprennent au moins une lame ressort 30 mince formant un pivot entre le deuxième cadre 22 et le troisième cadre 23.

Dans l'exemple de réalisation représenté à la Fig. 2, les moyens de maintien du troisième cadre 23 sont formés par une première lame ressort 30a du type clinquant fixée entre le prolongement 25a du deuxième cadre 22 et le prolongement 26a du troisième cadre 23 et une seconde lame ressort 30b mince également du type clinquant fixée entre le prolongement 25b du deuxième cadre 22 et le prolongement 26b du troisième cadre 23. Ces lames 30a et 30b forment un pivot et s'étendent perpendiculairement à la direction Y de déplacement du second cadre 22. Dans un mode particulier, les moyens de maintien du troisième cadre sont formés par une lame ressort 30 du type clinquant unique, qui s'étend du prolongement 25a au prolongement 25b auxquels elle est fixée.

Ces lames 30, 30a et 30b déformables en rotation jouent donc le rôle de pivot, tout en empêchant le déplacement du troisième cadre 23 dans le plan perpendiculaire à l'axe d'observation de l'objectif d'observation 3 et en permettant le déplacement de ce troisième cadre 23 selon une direction Z du repère orthonormé, c'est à dire selon l'axe d'observation. En utilisation, le déplacement selon la direction Z s'effectue selon un angle de pivotement limité, qui dépend notamment de la position de la plaque par rapport à l'objectif. Cet angle est typiquement inférieur à 0,5°. Grâce au dispositif de positionnement selon l'invention, un déplacement vertical de ± 150 µm se traduit par un déplacement horizontal très faible, de ± 0,15 µm, qui est très inférieur à la taille d'un pixel.

Selon une variante, non représentée, les moyens de maintien du troisième cadre 23 peuvent également être constitués, d'une part, par un axe d'articulation monté entre le deuxième cadre 22 et le troisième cadre 23 et s'étendant perpendiculairement à la direction Y de déplacement du second cadre 22 et, d'autre part, par au moins un ressort de torsion interposé entre lesdits deuxième et troisième cadres de façon à maintenir ce troisième cadre 23 sur le deuxième cadre 22, tout en autorisant son pivotement autour de l'axe d'articulation.

Le dispositif de positionnement comporte également des moyens de blocage de la plaque d'analyse 2 sur le troisième cadre 23 ainsi que des moyens d'immobilisation verticale du troisième cadre 23 pour la mise en place de la plaque d'analyse 2.

Ainsi que représenté à la Fig. 2, les moyens de blocage de la plaque 2 sont formés par des sabots 31 répartis sur le pourtour interne du troisième cadre 23, chaque sabot 31 ou, préférentiellement, un partie d'entre eux, particulièrement ceux disposés sur les cotés du cadre opposés à la came de blocage, comportant un évidement 31 a, comme représenté à la Fig. 4, destiné à recevoir le piétement de la plaque 2. Les sabots 31 sont fixés sur le troisième cadre 23 par des moyens appropriés constitués par exemple par des éléments de vissage 32. Différents jeux de sabots peuvent être utilisés, de manière alternative, adaptés à l'épaisseur du piétement des plaques d'analyse.

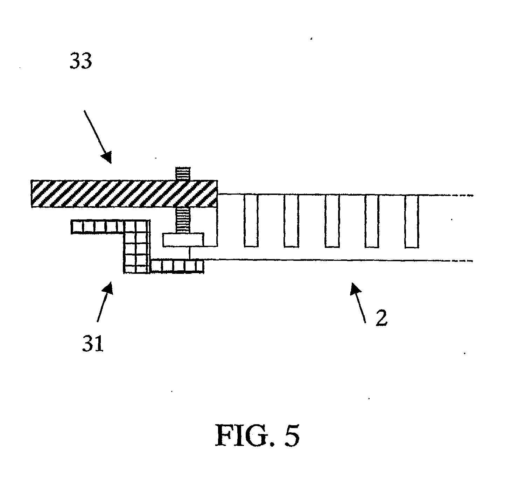

Les moyens de blocage de la plaque 2 comprennent également une came 33 déplaçable par pivotement autour d'un axe d'articulation vertical 34 entre une position escamotée et une position en saillie à l'intérieur dudit troisième cadre 23 pour bloquer la plaque 2 (Fig. 2). La came est avantageusement munie elle-même d'une vis, dont la tête ou la pointe est réglée pour venir en appui sur le piétement de la plaque 2 (Fig. 5).

Les moyens d'immobilisation du troisième cadre 23 pour la mise en place d'une plaque 2 sont formés par deux butées opposées, respectivement 35a et 35b, montées chacune sur un côté, respectivement 21 a et 21b, du premier cadre 21 s'étendant parallèlement à la direction Y de déplacement du second cadre 22.

Ainsi que représenté à la Fig. 3, les butées 35a et 35b comportent chacune un pan incliné.

Les moyens d'immobilisation du troisième cadre 23 comprennent aussi deux pattes, respectivement 36 et 36b, opposées, montées chacune sur un côté du troisième cadre 23 s'étendant parallèlement à la direction Y de déplacement du second cadre 22.

Chaque patte 36a et 36b est destinée à coopérer avec le pan incliné de la butée 35a et 35b correspondante de façon à immobiliser verticalement le troisième cadre 23, comme on le verra ultérieurement.

Enfin, le dispositif de positionnement comporte des moyens d'asservissement de la position verticale de la face d'observation 2b de la plaque d'analyse 2 par rapport à l'objectif d'observation 3.

Selon un premier mode de réalisation représenté à la Fig. 1, les moyens d'asservissement sont formés par une entretoise 40 solidaire de l'objectif 3. Cette entretoise 40 définit, à son extrémité libre, une surface pour l'appui de la face inférieure 2b de la plaque 2 dans le voisinage immédiat du fond du puits contenant l'échantillon à observer ou analyser. L'autre extrémité de l'entretoise 40 s'appuie sur l'extrémité de l'objectif 3.

Selon un second mode de réalisation, les moyens d'asservissement de la position verticale de la face d'observation 2b de la plaque d'analyse 2 sont formés par un système de sustentation magnétique ou piézo-électrique de cette plaque 2. L'élément de contrôle du déplacement du troisième cadre 23 selon l'axe d'observation est constitué par le reflet d'un faisceau lumineux, qui peut être celui de la lumière excitatrice, réfléchi sur le fond de la plaque 2 ou par l'interface fond de la plaque-échantillon.

La lumière réfléchie est, dans ce cas, détectée par un groupe de diodes et une boucle d'asservissement assujettit le troisième cadre 23 selon la direction Z de sorte à conserver l'équilibre des signaux sur les diodes.

Pour l'observation du contenu d'une plaque d'analyse 2, l'ensemble de support 20 assure un déplacement de cette plaque 2 dans le plan perpendiculaire à l'axe d'observation pour amener successivement chaque échantillon en regard de l'objectif d'observation. Pendant ce déplacement et pendant l'observation proprement dite d'un échantillon, la plaque 2 est maintenue dans le troisième cadre 23 par les sabots 31 et par la came 33 qui est positionnée en saillie à l'intérieur du troisième cadre 23, comme représenté à la Fig. 2.

De plus, sous l'action du poids de l'équipage mobile (cadre 23 + plaque 2) et des lames 30a et 30b qui exercent une force de rappel, le troisième cadre 23 maintient la face d'observation 2b de la plaque 2 en appui sur l'extrémité de l'entretoise 40 ou à une distance prédéterminée et fixe de l'objectif d'observation 3.

Le déplacement de la plaque 2 dans le plan perpendiculaire à l'axe d'observation, est donc assuré par le premier cadre 21 selon la direction X et par le deuxième cadre 22 selon la direction Y afin d'amener successivement les puits 2a dans l'axe d'observation de l'objectif d'observation 3.

Pour cela, les déplacements des cadres 21 et 22 sont motorisés.

Pour la mise en place d'une nouvelle plaque d'analyse 2, il convient que le troisième cadre 23 soit lui-même immobilisé selon la direction Z.

A cet effet, le deuxième cadre 22 et par conséquent le troisième cadre 23 sont déplacés dans le plan s'étendant perpendiculairement à l'axe d'observation jusqu'à ce que les pattes 36a et 36b viennent en contact avec les butées 35a et 35b.

Le mouvement selon la direction Y se poursuit si bien que les pattes 36a et 36b glissent sur les pans inclinés des butées 35a et 35b ce qui a pour effet de soulever le troisième cadre 23 et ce cadre 23 vient reposer sur les butées 35a et 35b de façon à l'immobiliser verticalement. A ce moment, la came 33 libère la précédente plaque d'analyse 2 qui peut être manipulée et remplacée par une autre plaque d'analyse 2.

Le mouvement de la came 33 peut être couplé mécaniquement ou électriquement avec le déplacement du troisième cadre 23, par des moyens appropriés. En particulier, elle peut porter un ergot actionné par une butée solidaire du cadre 21. Le mouvement de la came 33 peut également être réalisé manuellement.

Lors de la pose d'une nouvelle plaque d'analyse, la plaque 2 est tout d'abord posée sur les sabots 31, puis la came 33 pousse cette plaque 2 dont le pietement vient s'engager dans les évidements 31 a des sabots 31. La came 33 elle-même appuie sur le piétement de la plaque 2 interdisant tout mouvement de cette plaque 2 par rapport au troisième cadre 23. Le mouvement se poursuit selon Y, le cadre 23 et la plaque 2 solidaires descendent le long des butées 35a et 35b, jusqu'à ce que la face d'observation de la plaque 2 entre en contact avec l'entretoise 40. Les acquisitions d'images peuvent alors commencer.

Le dispositif de positionnement selon l'invention permet non seulement d'assurer un positionnement correct de la plaque d'analyse et de ce fait des puits devant l'objectif, mais également de reproduire ce positionnement lors de mesures répétées, tout en maintenant la mise au point, ce qui permet d'effectuer de véritables cinétiques sur des cellules individuelles ou d'effectuer des images sur des régions différentes d'un échantillon de grande taille, en vue de leur raccordement pixel à pixel.

Les dispositifs et procédés de l'invention peuvent être utilisés pour l'analyse d'échantillons d'origine et de nature diverses, marqués selon toute technique connue de l'homme du métier. Il peut s'agir notamment d'échantillons comprenant des cellules d'origine mammifère (animale ou humaine, par exemple cellules nerveuses, tumorales, immunitaires, etc.), bactérienne, végétale, de levure, d'organismes pathogènes, de virus, de tout échantillon ou prélèvement biologique, de coupes d'organes ou d'animaux entiers, etc. Les procédés et dispositifs sont adaptés à l'analyse ou la détection de polypeptides, acides nucléiques, lipides, etc. Ils sont particulièrement utilisables pour la mesure de l'effet de composés tests, notamment de bibliothèques de produits, sur des populations de cellules, par exemple dans des tests à haut débit de l'efficacité, la sélectivité ou la toxicité de produits.

Ainsi, dans un mode particulier, l'invention réside également dans une méthode d'analyse (ou de criblage) à haut débit utilisant un dispositif tel que décrit ci-avant, plus particulièrement dans lequel l'échantillon est composé d'une population de cellules mise en contact avec un colorant fluorescent représentatif d'une fonction cellulaire (e.g., prolifération, croissance, maturation, différentiation, mort, survie, apoptose, etc.), l'échantillon étant mis en contact, dans des puits séparés d'une plaque, avec des composés d'une collection test, les composés faisant varier l'intensité du marquage de fluorescence étant mis en évidence. La population de cellules est par exemple une population de neurones, notamment d'origine humaine ou animale.

Dans un mode particulier, le colorant fluorescent est associé à un anticorps associé à un antigène cellulaire. Ces anticorps couplés sont disponibles dans le commerce, par exemple ceux produits par la société Immunotech (Marseille, France).

Selon un autre mode de mise en oeuvre, l'invention réside dans un procédé de détection de la présence (ou de la quantité) d'une bactérie dans un
ou plusieurs échantillons, comprenant la mise en contact de chaque échantillon avec un marqueur de la bactérie, et l'analyse de la présence du marquage au moyen d'un dispositif tel que décrit ci-avant. Ces marqueurs peuvent être très spécifiques de la bactérie, comme les sondes d'acides nucléiques spécifiques du génome bactérien associées à des marqueurs de fluorescence, ou non spécifiques tels que l'acridine orange et tous les colorants des acides nucléiques. On les trouve en abondance dans le commerce, voir par exemple le catalogue Molecular Probes (Eugene, Oregon, USA).

Selon un autre mode de mise en oeuvre, l'invention réside dans un procédé de détection de la présence (ou de la quantité) d'un virus dans un ou plusieurs échantillons, comprenant la mise en contact de chaque échantillon avec un marqueur spécifique du virus, et l'analyse de la présence du marquage au moyen d'un dispositif tel que décrit ci-avant.

Selon un autre mode de mise en oeuvre, l'invention réside dans un procédé d'analyse d'une coupe totale ou partielle d'un organe ou d'un animal, comprenant l'analyse, au moyen d'un dispositif tel que décrit ci-avant, de la présence d'un marqueur dans différentes régions de la coupe. L'organe peut être tout tissu or organe d'intérêt, tel que fois, rein, coeur, poumon, cerveau, cervelet, rate, etc. L'animal peut être tout animal non-humain, tel qu'un mammifère, insecte, etc., par exemple un rongeur.

Selon un autre mode de l'invention, le dispositif comporte des filtres sur le trajet de la lumière de fluorescence qui délimitent des zones spectrales, par exemple des filtres dichroïques à 530, 585, et 650 nanomètres permettent d'utiliser jusqu'à quatre marqueurs fluorescents différents, avec une seule excitation à 488 nm, ainsi qu'on le pratique en cytométrie de flux. Ces colorants permettent l'analyse de plusieurs paramètres sur la même cellule. De même le faisceau d'excitation peut associer deux sources, soit simultanément, au moyen d'un miroir dichroïque, soit successivement au moyen d'un miroir ordinaire mobile ou encore par séparation des angles solides d'excitation, ce qui étend encore les possibilités de l'analyse multiparamétrique.

L'invention peut également être utilisée pour l'analyse de marquage sur billes, notamment d'interactions protéine-protéine, de complexes immuns, d'hybridations, etc.

Le mode d'acquisition à plusieurs longueurs d'onde est ici particulièrement avantageux, puisqu'il permet la discrimination de plusieurs catégories de particules. Si ces particules sont de taille homogène on peut distinguer des particules présentant des niveaux quantifiés de colorant fluorescent, par exemple une dizaine de niveaux différents. Ces particules peuvent être le siège de réactions analytiques, par exemple d'immunoanalyse, la réaction associée à chaque catégorie de particules peut être quantifiée par un autre marqueur, émettant à une autre longueur d'onde, la même pour toutes les réactions. On peut enregistrer ainsi autant de réactions analytiques différentes que l'on peut distinguer de catégories de particules.

Une autre utilisation de ce type de particules est le codage, lorsqu'elles sont associées à un processus de synthèse combinatoire. L'analyse des particules est le fidèle reflet du composé chimique associé, le contrôle de l'identification pouvant se faire en dehors du laboratoire où s'effectue la mesure, par transmission électronique des données.

Dans une autre utilisation, une population homogène de particules fluorescentes est utilisée pour définir une surface de correction pour l'énergie d'excitation, qui n'est pas uniforme sur tout le champ d'observation ; en particulier, les lasers présentent une distribution gaussienne de l'énergie. La mesure de l'énergie réémise par chaque particule reflète le niveau de l'énergie d'excitation au point où elle se trouve. Avec un petit nombre de particules réparties au hasard sur la surface observée, il est possible de définir une surface, par interpolation, qui servira ensuite à normaliser les niveaux des pixels observés sur des échantillons inconnus. Une surface émettrice uniforme peut aussi servir à cette normalisation.

L'invention peut encore être utilisée pour analyser les dépôts d'acides nucléiques après hybridations avec des sondes, notamment sur puce, microarrays, etc. Il peut s'agir notamment de dépôts d'ADN après hybridation par des séquences correspondantes d'ADN ou d'ARN, issus d'une cellule ou d'un échantillon, et marqués par un élément fluorescent. Ces dépôts se présentent préférentiellement en arrangements réguliers présentant jusqu'à 5000 dépôts qui peuvent être lus en une seule fois par le dispositif. Plusieurs blocs de dépôts placés côte à côte peuvent être lus séquentiellement .

L'invention peut aussi être utilisée pour analyser des dépôts de polypeptides (par exemple de protéines), notamment sur le fond du support (par exemple le fond d'une plaque), une puce, des microarrays, etc., révélés par des anticorps ou autres ligands marqués, typiquement fluorescents. Il peut s'agir notamment de dépôts d'allergènes, d'antigènes bactériens, d'antigènes auto-immuns, d'antigènes spécifiques de tumeurs, etc., éventuellement en combinaison(s). Ces dépôts se présentent préférentiellement en arrangements réguliers présentant jusqu'à 5000 dépôts. Les dépôts sont typiquement mis en contact avec un échantillon biologique d'un sujet pour lequel on souhaite rechercher la présence d'anticorps dirigés contre l'un ou plusieurs de ces polypeptides. Les échantillons sont ensuite incubés avec un deuxième réactif révélateurs, par exemple un anticorps fluorescent, et les résultats peuvent être analysés en une seule fois par le dispositif. Plusieurs blocs de dépôts placés côte à côte peuvent être lus séquentiellement.

## Revendications

1. Dispositif de positionnement d'une plaque (2) comprenant un ou des échantillons sur un dispositif d'observation ou d'analyse comportant un objectif d'observation ou d'analyse (3) d'au moins une partie d'un échantillon suivant un axe d'observation depuis une face d'observation (2b) de la plaque (2) et un châssis (11) muni d'un ensemble (20) de support de la plaque (2) avec:
- un premier cadre (21) déplaçable à coulissement dans un plan perpendiculaire à l'axe d'observation,
- un deuxième cadre (22) supporté par le premier cadre (21) et déplaçable à coulissement dans ledit plan perpendiculaire à l'axe d'observation, les premier et deuxième cadres (21 ; 22) étant déplaçables selon une direction perpendiculaire à la direction de déplacement de l'autre cadre, et **caracterisé en ce que** cet ensemble (20) de support comprend :
- un troisième cadre (23) supporté par le deuxième cadre (22) par des moyens (30) de maintien de ce troisième cadre (23) bloquant ledit troisième cadre (23) dans le plan perpendiculaire à l'axe d'observation, tout en laissant libre le déplacement du troisième cadre (23) essentiellement selon l'axe d'observation, ledit troisième cadre (23) étant pourvu de moyens (31, 33) de blocage de la plaque (2),
- et des moyens (40) d'asservissement de la position verticale de la face d'observation (2b) de la plaque (2) par rapport à l'objectif d'observation (3).

2. Dispositif selon la revendication 1, **caractérisé en ce qu'**il comporte des moyens (35a, 35b ; 36a, 36b) d'immobilisation verticale du troisième cadre (23) pour la mise en place de la plaque d'analyse (2).

3. Dispositif selon l'une quelconque des revendications 1 à 2, **caractérisé en ce que** les moyens de maintien du troisième cadre (23) comprennent au moins une lame ressort (30a ; 30b) mince formant un pivot, située préférentiellement dans le plan d'observation, ladite lame ressort (30a ; 30b) étant reliée respectivement au deuxième cadre (22) et au troisième cadre (23).

4. Dispositif selon l'une quelconque des revendications 1 à 2, **caractérisé en ce que** les moyens de maintien du troisième cadre (23) comprennent, d'une part, un axe d'articulation monté entre les deuxième et troisième cadres (22 ; 23) s'étendant de préférence perpendiculairement à la direction de déplacement du second cadre (22) et, d'autre part, au moins un ressort de torsion interposé entre lesdits deuxième et troisième cadres (22 ; 23).

5. Dispositif selon l'une quelconque des revendications précédentes, **caractérisé en ce que** les moyens de blocage de la plaque (2) sont formés par des sabots d'appui (31) répartis sur le pourtour interne du troisième cadre (23) et une came (33) montée sur le troisième cadre (23) et déplaçable par pivotement entre une position escamotée et une position en saillie à l'intérieur du troisième cadre (23) pour bloquer la plaque (2).

6. Dispositif selon la revendication 5, **caractérisé en ce que** la came comporte une vis dont la tête ou la pointe peut reposer sur le piétement de la plaque.

7. Dispositif selon la revendication 5 ou 6, **caractérisé en ce que** une partie des sabots comportent un évidemment destiné à recevoir le piétement de la plaque.

8. Dispositif selon l'une quelconque des revendications précédentes, **caractérisé en ce que** les moyens d'immobilisation du troisième cadre sont formés par deux butées opposées (35a, 35b), montées chacune sur un côté du premier cadre (21) s'étendant parallèlement à la direction de déplacement du second cadre (22) et par deux pattes (36a, 36b) opposées et fixées chacune perpendiculairement à un côté du troisième cadre (23) s'étendant parallèlement à ladite direction, chaque butée (35a, 35b) comportant un pan incliné destiné à coopérer avec l'extrémité libre de la patte (35a, 36b) correspondante lors du déplacement dans cette direction des deuxième et troisième cadres (22 ; 23).

9. Dispositif selon la revendication 1, **caractérisé en ce que** les moyens d'asservissement sont formés par une entretoise (40) fixe par rapport à l'objectif d'observation (3) et présentant une surface d'appui de la face d'observation (2b) de la plaque (2).

10. Dispositif selon la revendication 1, **caractérisé en ce que** les moyens d'asservissement sont formés par un système de sustentation magnétique ou piézoélectrique de la plaque (2).

11. Dispositif selon l'une quelconque des revendications précédentes, **caractérisé en ce que** les déplacements du premier et du second cadres (21 ; 22) sont motorisés.

12. Dispositif d'observation ou d'analyse d'échantillons, **caractérisé en ce qu'**il comprend un dispositif de positionnement d'une plaque selon l'une des revendications 1 à 11, une source d'illumination d'au moins une partie d'un échantillon et des moyens d'acquisition d'une image.

13. Dispositif selon la revendication 12, **caractérisé en ce que** la source d'illumination est une lampe, un laser ou un ensemble de diodes électroluminescentes.

## Patentansprüche

1. Positionierungsvorrichtung für eine Platte (2), die eine oder mehrere Proben auf einer Beobachtungs- oder Analysevorrichtung enthält, umfassend ein Objektiv (3) zur Beobachtung oder Analyse von wenigstens einem Teil einer Probe entlang einer Beobachtungsachse ausgehend von einer Beobachtungsseite (2b) der Platte (2) und ein Gestell (11), das mit einer Halterungseinheit (20) der Platte (2) ausgestattet ist, mit
- einem ersten Rahmen (21), der gleitend in einer zur Beobachtungsachse senkrechten Ebene verschiebbar ist,
- einem zweiten Rahmen (22), der von dem ersten Rahmen (21) getragen wird und gleitend in der zur Beobachtungsachse senkrechten Ebene verschiebbar ist, wobei der erste und der zweite Rahmen (21; 22) entlang einer Richtung verschiebbar sind, die senkrecht zur Verschiebungsachse des anderen Rahmens verläuft, und
**dadurch gekennzeichnet, dass** diese Halterungseinheit (20) enthält:
- einen dritten Rahmen (23), der durch den zweiten Rahmen (22) über Mittel (30) zum Halten diese dritten Rahmens (23) getragen wird, die den dritten Rahmen (23) in der zur Beobachtungsachse senkrechten Ebene arretieren, dabei gleichzeitig jedoch die Verschiebung des dritten Rahmens (23) im Wesentlichen entlang der Beobachtungsachse ungehindert lassen, wobei der dritte Rahmen (23) mit Mitteln (31, 33) zum Arretieren der Platte (2) ausgestattet ist,
- und Mittel (40) zur Steuerung der vertikalen Position der Beobachtungsseite (2b) der Platte (2) in Bezug auf das Beobachtungsobjektiv (3).

2. Vorrichtung nach Anspruch 1, **dadurch gekennzeichnet, dass** sie Mittel (35a, 35b; 36a, 36b) zur vertikalen Immobilisierung des dritten Rahmens (23) für das Einsetzen der Analyseplatte (2) aufweist.

3. Vorrichtung nach einem der Ansprüche 1 bis 2, **dadurch gekennzeichnet, dass** die Mittel zum Halten des dritten Rahmens (23) wenigstens ein dünnes Federblatt (30a; 30b) umfassen, das einen Drehpunkt bildet, welches vorzugsweise in der Beobachtungsebene liegt, wobei das Federblatt (30a; 30b) jeweils mit dem zweiten Rahmen (22) und dem dritten Rahmen (23) verbunden ist.

4. Vorrichtung nach einem der Ansprüche 1 bis 2, **dadurch gekennzeichnet, dass** die Mittel zum Halten des dritten Rahmens (23) einerseits eine Gelenkachse umfassen, die zwischen dem zweiten und dem dritten Rahmen (22; 23) angebracht ist und sich vorzugsweise senkrecht zur der Verschiebungsrichtung des zweiten Rahmens (22) erstreckt, und andererseits wenigstens eine Torsionsfeder, die zwischen dem zweiten und dem dritten Rahmen (22; 23) eingesetzt ist.

5. Vorrichtung nach einem der vorhergehenden Ansprüche, **dadurch gekennzeichnet, dass** die Mittel zum Arretieren der Platte (2) durch Lagerböcke (31), die auf dem inneren Umfang des dritten Rahmens (23) verteilt sind, und einen Nocken (33) ausgebildet werden, der auf dem dritten Rahmen (23) angebracht und durch Drehung zwischen einer abgesenkten Position und einer im Inneren des dritten Rahmens (23) hervorspringenden Position verschiebbar ist, um die Platte (29) zu arretieren.

6. Vorrichtung nach Anspruch 5, **dadurch gekennzeichnet, dass** der Nocken eine Schraube umfasst, deren Kopf oder Spitze auf dem Gestell der Platte aufliegen kann.

7. Vorrichtung nach Anspruch 5 oder 6, **dadurch gekennzeichnet, dass** ein Teil der Lagerböcke eine Aussparung aufweist, die zur Aufnahme des Gestells der Platte bestimmt ist.

8. Vorrichtung nach einem der vorhergehenden Ansprüche, **dadurch gekennzeichnet, dass** die Mittel zur Immobilisierung des dritten Rahmens aus zwei gegenüberliegenden Anschlagstücken (35a, 35b) gebildet sind, die jeweils auf einer Seite des ersten Rahmens (21) angebracht sind und sich parallel zur Verschiebungsrichtung des zweiten Rahmens (229 erstrecken, sowie durch zwei gegenüberliegende und jeweils senkrecht zur einer Seite des dritten Rahmens (23) befestigte Laschen (36a, 36b), die sich parallel zu der Richtung erstrecken, wobei jedes Anschlagstück (35a, 35b) eine schräge Fläche aufweist, die zum Zusammenwirken mit dem freien Ende der entsprechenden Lasche (36a, 36b) während der Verschiebung des zweiten und des dritten Rahmens (22; 23) in diese Richtung bestimmt ist.

9. Vorrichtung nach Anspruch 1, **dadurch gekennzeichnet, dass** die Mittel zur Steuerung aus einem Abstandhalter (40) ausgebildet werden, der in Bezug auf das Beobachtungsobjektiv (3) fixiert ist und eine Auflageoberfläche der Beobachtungsseite (2b) der Platte (2) darstellt.

10. Vorrichtung nach Anspruch 1, **dadurch gekennzeichnet, dass** die Mittel zur Steuerung aus einem magnetischen oder piezoelektrischen Schwebesystem der Platte (2) gebildet sind.

11. Vorrichtung nach einem der vorhergehenden Ansprüche, **dadurch gekennzeichnet, dass** die Verschiebungen des ersten und des zweiten Rahmens (21; 22) motorisiert erfolgen.

12. Vorrichtung zur Beobachtung oder Analyse von Proben, **dadurch gekennzeichnet, dass** sie eine Vorrichtung zur Positionierung einer Platte gemäß einem der Ansprüche 1 bis 11, eine Beleuchtungsquelle für wenigstens einen Teil einer Probe und Mittel zur Bilderfassung umfasst.

13. Vorrichtung nach Anspruch 12, **dadurch gekennzeichnet, dass** die Beleuchtungsquelle eine Lampe, ein Laser oder eine Leuchtdiodeneinheit ist.

## Claims

1. A device for positioning a plate (2) comprising one or more samples on an observation or analysis device comprising an observation or analysis lens (3) of at least part of a sample along an observation axis from an observation face (2b) of the plate (2) and a chassis (11) having a support assembly (20) for the plate (2), with:
- a first movable frame (21) sliding in a plane perpendicular to the observation axis;
- a second movable frame (22) supported by the first frame (21) sliding in said plane perpendicular to the observation axis, the first and second frames (21 ; 22) being movable in a direction perpendicular to the direction in which other frame moves; and
**characterized in that** this support assembly (20) comprises:
- a third frame (23) supported by the second frame (22) by means (30) used to maintain the third frame (23) blocking said third frame (23) in the plane perpendicular to the observation axis, while leaving the third frame (23) free to move essentially along the observation axis, said third frame (23) presenting means (31 , 33) to immobilise the plate (2),
- and means (40) of controlling the vertical position of the observation face (2b) of the plate (2) with respect to the observation lens (3).

2. A device according to claim 1, **characterized in that** it comprises means (35a, 35b; 36a, 36b) used to immobilise the third frame (23) in the vertical position for placing the analysis plate (2).

3. A device according to any of claims 1 to 2, **characterized in that** the means used to maintain the third plate (23) comprise at least one thin spring plate (30a ; 30b) forming a pivot, preferably located in the observation plane, said spring plate (30a ; 30b) being connected respectively to the second (22) and third frame (23).

4. A device according to any of claims 1 to 2, **characterized in that** the means used to hold the third frame (23) comprise on one hand a hinge pin located between the second and third frames (22 ; 23) preferably extending perpendicular to the motion direction of the second frame (22) and on the other hand at least one torsional spring located between said second and third frames (22 ; 23).

5. A device according to any of the preceding claims, **characterized in that** the means used to immobilise the plate (2) are comprised by supporting shoes (31) arranged around the inner periphery of the third frame (23) and a cam (33) mounted on the third frame (23) which can be pivoted between a retracted position and a projecting position inside the third frame (23) so as to immobilise the plate (2).

6. A device according to claim 5, **characterized in that** the cam comprises a screw whose head or tip can rest on the base of the plate.

7. A device according to claim 5 or 6, **characterized in that** part of the shoes comprises a recess intended for taking the base of the plate.

8. A device according to any of the preceding claims, **characterized in that** the means used to immobilise the third frame are comprised by two opposing limit stops (35a, 35b), each mounted on one side of the first frame (21) extending parallel to the motion direction of the second frame (22) and by two opposing ties (36a, 36b) each fixed perpendicular to one side of the third frame (23) extending parallel to said direction, with each limit stop (35a, 35b) comprising an inclined face designed to work in conjunction with the free end of the corresponding tie (36a, 36b) when the second and third frames (22 and 23) move in this direction.

9. A device according to claim 1, **characterized in that** the means of control are comprised by a strut (40) fixed with respect to the observation lens (3) and having a bearing area of the observation face (2b) of the plate (2).

10. A device according to claim 1, **characterized in that** the means of control are comprised by a magnetic or piezoelectric lift system for the plate (2).

11. A device according to any of the preceding claims, **characterized in that** the motions of the first and second frames (21 and 22) are motorised.

12. A sample observation or analysis device, **characterized in that** it comprises a positioning device for a plate according to any of claims 1 to 11, a light source for at least part of a sample and image acquisition means.

13. A device according to claim 12, **characterized in that** the light source is a lamp, a laser or an array of electroluminescent diodes.
